**Europäisches Patentamt**

**European Patent Office**

**Office européen des brevets**

(11) Veröffentlichungsnummer: **0 129 806**
**B1**

(12) **EUROPÄISCHE PATENTSCHRIFT**

(45) Veröffentlichungstag der Patentschrift:
**11.05.88**

(51) Int. Cl.⁴: **B 66 C 9/10**, B 66 C 23/62,
B 62 D 55/10

(21) Anmeldenummer: **84106893.5**

(22) Anmeldetag: **15.06.84**

(54) **Fahrwerk, vorzugsweise Raupenfahrwerk für Kran.**

(30) Priorität: **21.06.83 DE 3322270**

(43) Veröffentlichungstag der Anmeldung:
**02.01.85 Patentblatt 85/1**

(45) Bekanntmachung des Hinweises auf die Patenterteilung:
**11.05.88 Patentblatt 88/19**

(84) Benannte Vertragsstaaten:
**AT BE NL**

(56) Entgegenhaltungen:
**DE - A - 2 841 378**
**DE - C - 578 075**
**DE - C - 611 736**
**GB - A - 1 048 722**

(73) Patentinhaber: **Liebherr-Werk Bischofshofen GmbH,
Gasteiner Strasse 90, A-5500 Bischofshofen (AT)**

(72) Erfinder: **Zerza, Horst, Raiffeisenstrasse 12, A-5600 St.
Johann (AT)**
Erfinder: **Wolsetschläger, Johann, Alte
Bundesstrasse 11, A-5500 Bischofshofen (AT)**
Erfinder: **Rieder, Heinz, Steggasse 29,
A-5500 Bischofshofen (AT)**
Erfinder: **Bauder, Hans-Werner, Dipl.-Ing.,
Rettenstein 96, A-5600 St. Johann (AT)**

(74) Vertreter: **Lorenz, Eduard et al, Rechtsanwälte Lorenz,
Eduard - Seidler, Bernhard Seidler, Margrit - Gossel,
Hans-K. Philipps, Ina, Dr. Widenmayerstrasse 23,
D-8000 München 22 (DE)**

ACTORUM AG

**Beschreibung**

Die Erfindung betrifft ein Fahrwerk mit einer mit dessen Fahrwerksrahmen über hydraulische Pressen verbundenen Plattform, vorzugsweise Raupenfahrwerk für Krane, nach dem Oberbegriff des Patentanspruchs 1.

Bestimmte Spezialtransporte erfordern es, dass die das Transportgut tragende Plattform, beispielsweise bei Flüssigkeitstransporten, oder die mit Aufbauten versehene Plattform mit Rücksicht auf das Transportgut oder aus Stabilitätsgründen unabhängig von dem den Neigungen des Geländes folgenden Fahrwerk eine waagerechte Stellung beibehalten.

Das Problem, eine Plattform oder einen Rahmen unabhängig von geländebedingten Neigungen des Fahrwerks in einer im wesentlichen waagerechten Lage transportieren zu müssen, ergibt sich insbesondere dann, wenn die Plattform oder der Rahmen die Basis eines fahrbaren oder eines zu versetzenden Turmkranes bildet. Es ist bekannt, auf niedrigen Portalen stehende Turmkräne dadurch zu versetzen, dass unter die Portale ein Raupenfahrwerk eingefahren und mit der tragenden Plattform oder dem Grundrahmen des Portals verbunden wird. Da aus Stabilitätsgründen bei dem Transport der Turm in seiner vertikalen Stellung verbleiben muss, muss die Verbindung zwischen der Plattform oder dem Grundrahmen und dem Fahrwerksrahmen des Raupenfahrwerks derart ausgeführt sein, dass die Plattform oder der Grundrahmen unabhängig von der jeweiligen Neigung des Raupenfahrwerks in einer horizontalen Lage verbleiben.

Bei einem aus DE-A 2 841 378 bekannten Fahrwerk nach dem Oberbegriff des Patentanspruchs 1 sind 4 hydraulische Pressen vorgesehen, deren Zylinder an dem Raupenwerk befestigt sind und deren Kolbenstangen an ein Untergestell gelenkig angekuppelt sind, das den Turm eines Turmdrehkrans trägt. Werden bei diesem bekannten Fahrwerk die Kolbenstangen bei einer Neigung des Fahrwerks unterschiedlich weit ausgefahren, kann es zu unerwünschten Verspannungen des Untergestells kommen.

Eine aus der Praxis unter Firmenschrift der Firma Liebherr «Le Porteur sur Chenilles pour grues HC Liebherr» bekannte Verbindung des Grundrahmens mit dem Fahrwerksrahmen besteht aus vier an den Ecken eines Rechtecks angeordneten Pendelstützen, die durch hydraulische Pressen gebildet sind, deren Zylinder gelenkig mit dem Fahrwerksrahmen und deren Kolbenstangen gelenkig mit dem Grundrahmen verbunden sind, wobei die gelenkigen Verbindungen Schwenkwinkel zulassen, die den grössten zulässigen Neigungen des Raupenfahrwerks entsprechen. Da die Pressen nur vertikale Kräfte aufnehmen können und den Grundrahmen nicht gegen horizontale Bewegungen zu fixieren vermögen, muss zusätzlich ein um eine horizontale Achse des Grundrahmens schwenkbarer Träger vorgesehen werden, dessen anderes Ende durch ein Universalgelenk, beispielsweise Kardangelenk, mit dem Fahrwerksrahmen verbunden ist. Diese Art der Verbindung kann selbstverständlich auch bei selbstfahrenden Kranen verwendet werden.

Abgesehen davon, dass zum Versetzen von auf Portalen stehenden Kranen verhältnismässig aufwendige und zeitraubende Arbeiten zum Anbolzen und Verbinden des Grundrahmens des Portals mit dem Fahrwerksrahmen erforderlich sind, können die Verbindungen Verspannungen des Grundrahmens bewirken, weil dieser über fünf Elemente mit dem Fahrwerksrahmen verbunden ist, wobei die Steuerung der vier hydraulischen Pressen selten so genau sein wird, dass diese nicht auch in einem gewissen Ausmass gegeneinander arbeiten.

Weiterhin ist aus der Praxis eine Abstützung des Oberwagens eines selbstfahrenden Raupenkranes bekannt, bei der der Grundrahmen über drei an den Ecken eines Rechtecks angeordnete aus hydraulischen Pressen bestehenden Pendelstützen mit dem Fahrwerksrahmen verbunden ist, wobei in der vierten Ecke ein den Grundrahmen mit dem Fahrwerksrahmen verbindendes Kardangelenk vorgesehen ist. Abgesehen von der aufwendigen Konstruktion können die hydraulischen Pressen ebenfalls kaum so genau gesteuert werden, dass Verspannungen des Grundrahmens vermieden sind.

Aufgabe der Erfindung ist es daher, ein Fahrwerk der eingangs angegebenen Art zu schaffen, dessen Plattform oder Grundrahmen in konstruktiv einfacherer Weise mit dessen Fahrwerksrahmen verbunden ist.

Erfindungsgemäss wird diese Aufgabe durch die kennzeichnenden Merkmale des Patentanspruchs 1 gelöst.

Das erfindungsgemässe Fahrwerk zeichnet sich durch eine wesentlich vereinfachte Konstruktion aus, weil dessen Plattform oder Grundrahmen nur über die erfindungsgemäss ausgebildeten hydraulischen Pressen mit dessen Fahrwerksrahmen verbunden ist. Die erfindungsgemässe Kombination von Universalgelenken mit mit Rückstelleinrichtungen versehenen Gleitträgern ermöglicht es, die Verbindung zwischen dem Fahrwerksrahmen und der Plattform oder dem Grundrahmen nur über die hydraulischen Pressen zu verwirklichen, so dass die gesamte Verbindungskonstruktion bei wesentlicher Vereinfachung durch eine leichtere Bauweise ausgeführt werden kann. Die Rückstellkraft der Rückstelleinrichtungen ist so zu bemessen, dass die grössten auftretenden Querkräfte aufgenommen werden können. Auf ein besonderes, die Plattform oder den Grundrahmen gegen Querverschiebungen sicherndes Universalgelenk kann daher verzichtet werden.

Es können beliebig viele die Plattform oder den Grundrahmen stützende hydraulische Pressen vorgesehen werden, die beispielsweise an den Ecken eines Vierecks oder auch auf einer Kreislinie angeordnet werden können. Nach einer besonders vorteilhaften erfinderischen Ausführungsform sind jedoch nur drei hydraulische Pressen vorgesehen. Durch drei an den Ecken eines Dreiecks angeordnete hydraulische Pressen der erfindungsgemässen Ausgestaltung wird ein statisch bestimmtes System geschaffen, so dass Spannungen des von den Pressen getragenen Grundrahmens bei jeder zulässigen Neigung des Fahrwerkrahmens vermieden sind. Selbst wenn also das Niveausteuergerät die Pressen entsprechend der jeweiligen Neigung des Fahrwerks nicht absolut genau steuern sollte, sind Verspannungen des Grundrahmens ausgeschlossen. Die erfindungsgemäss ausgebildeten Pressen lassen sich weiterhin auch sehr viel näher zueinander anordnen, als es bei einer Abstützung über vier Pressen möglich ist, so dass die von den Pressen getragene Basisfläche kleiner ist und mit einem geringeren Pressenhub grössere Neigungswinkel ausgeglichen werden können. Mit den erfindungsgemässen Pressen ausgerüstete Raupenfahrwerke können problemlos Neigungen im Bereich von 10% ausführen, während bei der Verwendung von vier Pressen lediglich eine Ausgleichsmöglichkeit von etwa 6% bestand.

Ein weiterer Vorteil bei der Verwendung von nur drei Pressen besteht darin, dass auch die von den Rückstellelementen aufzunehmenden Querkräfte sich ausgleichen.

Zweckmässigerweise besteht das Universalgelenk aus einem Kugelgelenk.

In weiterer Ausgestaltung der Erfindung ist vorgesehen, dass auf der Kolbenstange ein auf seiner Oberseite mit einer kugelkalottenförmigen Lagerschale versehenes Gelenkteil befestigt ist, dessen unterer ringförmiger Umfangsbereich kugelig mit zu der Lagerschale konzentrischer Kugelfläche ausgebildet ist, dass in der Lagerschale eine Lagerscheibe mit einem unteren zu dieser komplementären Kugelabschnitt abgestützt ist, die auf ihrer Oberseite mit der ebenen Lagerfläche versehen ist und die an ihrem Rand mit einem ringförmigen Teil verbunden ist, dass einen unteren, nach innen gerichteten flanschförmigen Absatz aufweist, der auf seiner Innenseite eine dem kugeligen ringförmigen Umfangsbereich anliegende konkave kugelkalottenförmige Fläche aufweist.

Zweckmässigerweise ist das mit einer ebenen Gleitfläche versehene Gegenlagerteil mit einem dem ringförmigen Teil des Kugelgelenks und der Bildung eines Ringraumes übergreifenden rohabschnittförmigen Ringteil verbunden, das an seinem unteren Ende einen nach innenweisenden flanschförmigen Absatz aufweist, der mit einer ebenen radialen zu der oberen Gleitfläche parallelen Gleitfläche versehen ist, die an einer auf der unteren Stirnfläche des ringförmigen Teils gebildeten Gleitfläche anliegt, wobei der Ringraum vorgespannte, elastisch federnde, sich gegen dessen Wandungen abstützende Elemente aufweist. Zweckmässigerweise bestehen die Elemente aus Ringen aus elastomerem Material. Die den Ringraum begrenzenden Wandungen der ringförmigen Teile können zylindrisch ausgebildet sein.

Ein Ausführungsbeispiel der Erfindung wird nachstehend anhand der Zeichnung näher erläutert. In dieser zeigt

Fig. 1 den Unter- und Oberwagen eines selbstfahrenden Krans mit Raupenfahrwerk in schematischer Darstellung.

Fig. 2 eine Draufsicht auf das Raupenfahrwerk nach Fig. 1,

Fig. 3 eine Vorderansicht des Unterwagens nach Fig. 1,

Fig. 4 eine Seitenansicht des Unterwagens nach Fig. 1 in vergrösserter Darstellung,

Fig. 5 eine Draufsicht auf den Unterwagen nach Fig. 4,

Fig. 6 eine teilweise Vorderansicht des Unterwagens nach Fig. 4,

Fig. 7 eine Seitenansicht eines auf einem Portal angeordneten Turmdrehkrans mit eingefahrenem und an dem Tragrahmen des Portals angedocktem Raupenfahrwerk in schematischer Darstellung,

Fig. 8 eine Draufsicht auf das Raupenfahrwerk nach Fig. 7,

Fig. 9 eine Vorderansicht des Portals mit Raupenfahrwerk nach Fig. 7 und

Fig. 10 eine Seitenansicht der hydraulischen Presse mit einer Schnittdarstellung des kombinierten Kugelgelenk-Gleitlagers.

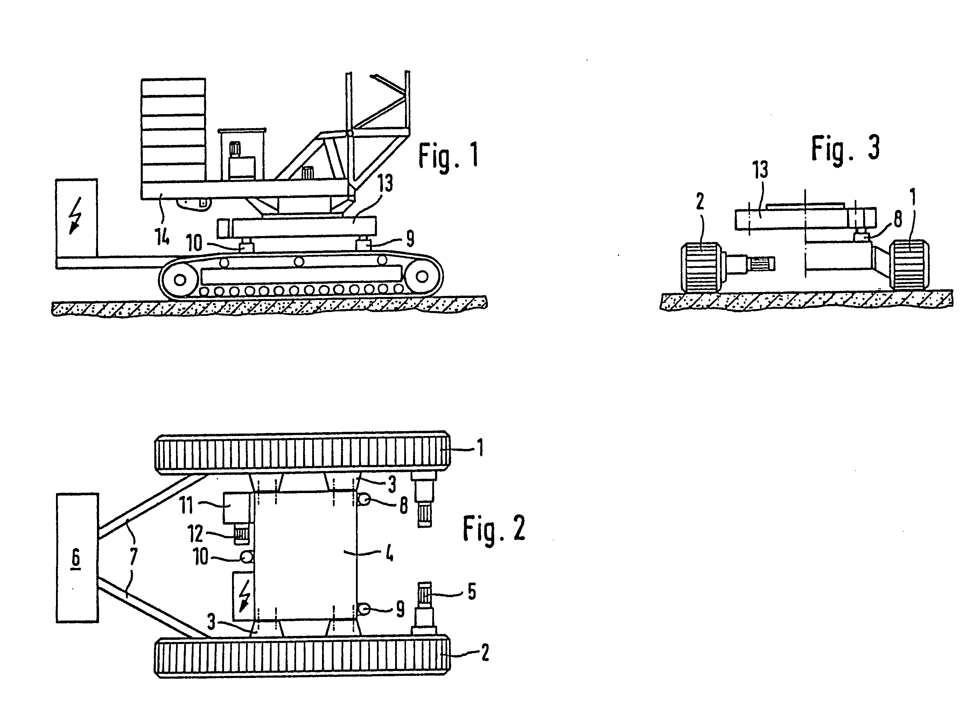

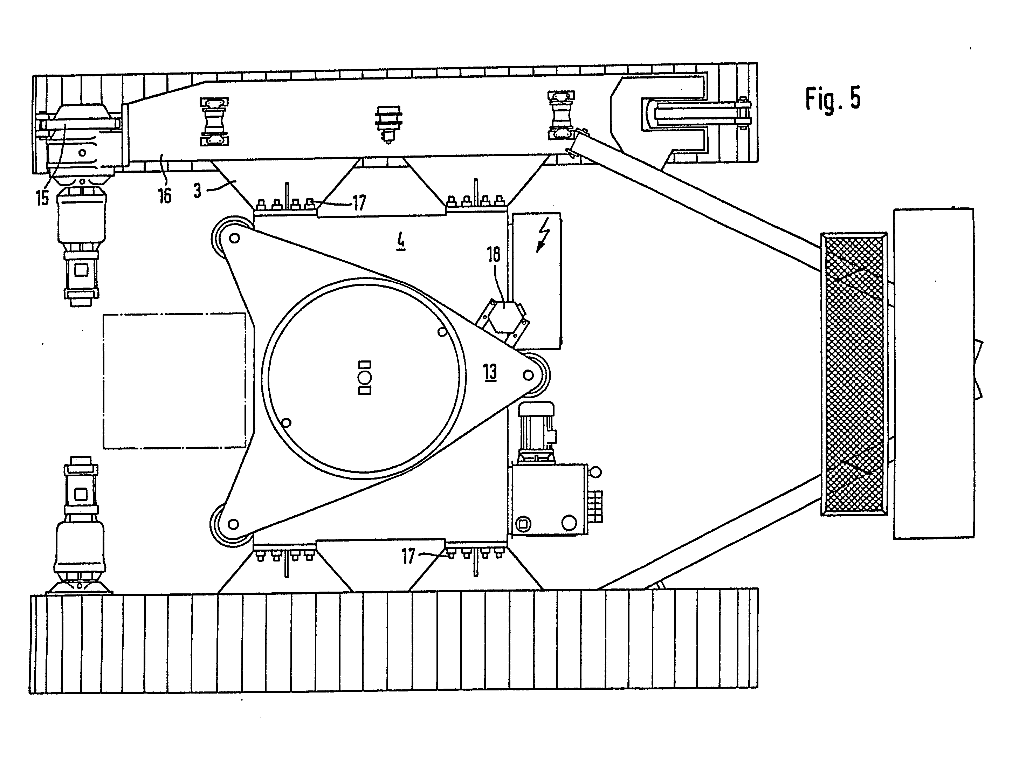

Das aus Fig. 1–9 ersichtliche Raupenfahrwerk ist grundsätzlich gleichen Aufbaus und besteht aus den Raupenketten 1, 2, die in üblicher Weise über Turasse angetrieben sind und über Kettenräder laufen, die in seitlichen Trägern gelagert sind, die über Anschlussstücke 3 mit der zentralen Trägerkonstruktion 4 verbunden sind und mit dieser gemeinsam den Fahrwerksrahmen bilden. Der Antrieb der Turasse erfolgt über entsprechende Getriebe über Elektromotoren 5. Der Strom für diese Elektromotoren wird von dem Dieselaggregat 6 erzeugt, dass über Tragarme 7 mit dem Fahrwerksrahmen verbunden ist.

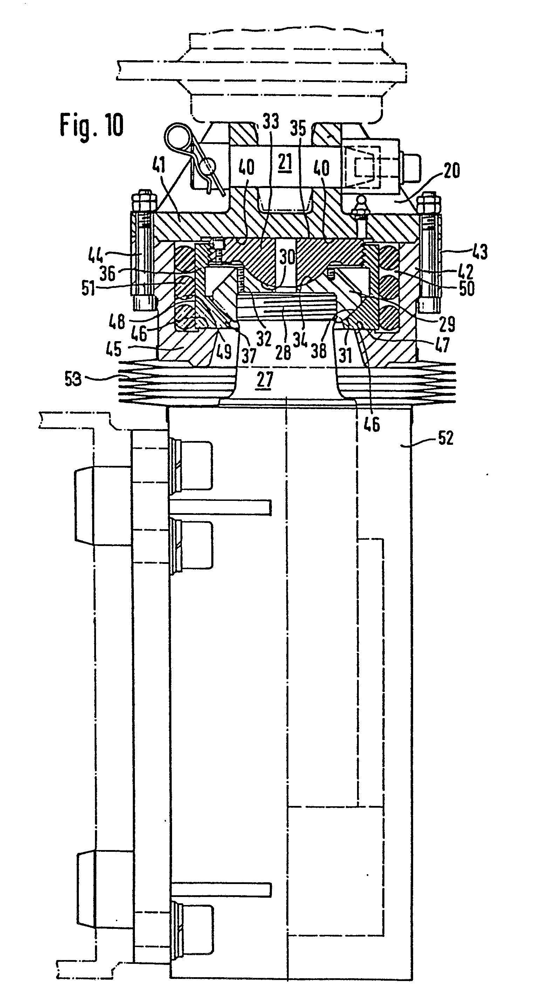

Die symetrisch zwischen den Raupen 1, 2 angeordnete rechteckige Trägerkonstruktion 4 ist in ihren vorderen Eckbereichen mit den Zylindern der hydraulischen Pressen 8, 9 und an ihrem hinteren mittleren Bereich mit dem Zylinder der hydraulischen Presse 10 starr verbunden. Zur Versorgung der hydraulischen Pressen 8, 9, 10 mit Hydraulik ist eine Hydraulikpumpe 11 vorgesehen, die von dem Elektromotor 12 angetrieben wird. Mit den Kolbenstangen der hydraulischen Pressen 8, 9, 10 ist über kombinierte Kugelgelenk-Gleitlager, die anhand der Fig. 10 näher beschrieben werden, die Plattform 13 verbunden, die den Oberwagen in einer im wesentlichen horizontalen Lage hält. Die hydraulischen Pressen 8, 9, 10 werden von einem Niveausteuergerät in der Weise gesteuert, dass sich die Plattform 13 unabhängig von der Neigung des Raupenfahrwerks in einer im wesentlichen waagerechten Lage befindet.

Bei dem Ausführungsbeispiel nach den Fig. 1-6 ist der Oberwagen 14 in üblicher Weise durch ein Drehwerk mit der Plattform 13 des Unterwagens verbunden.

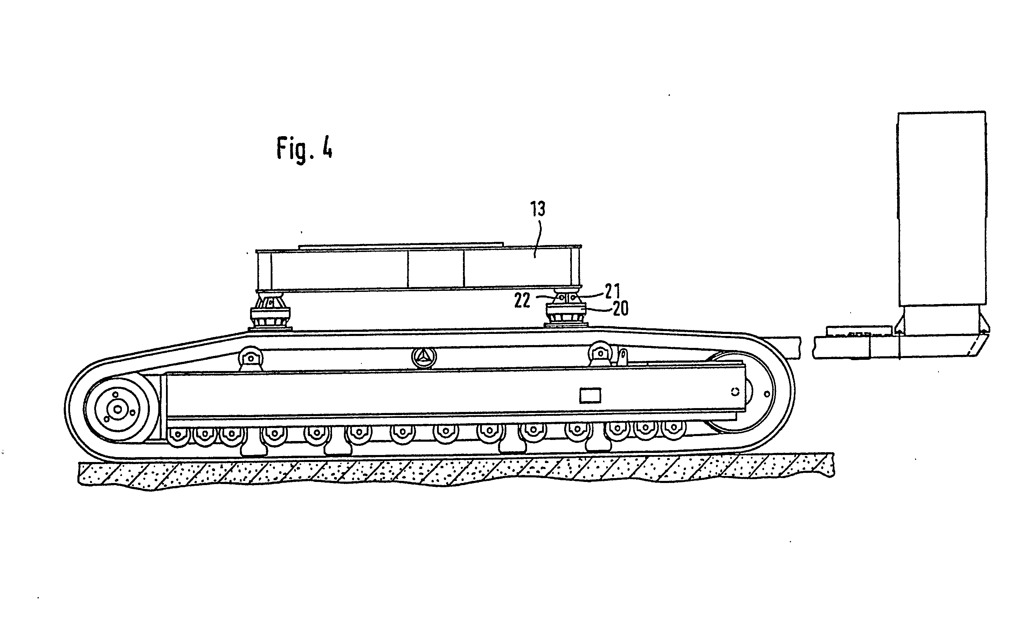

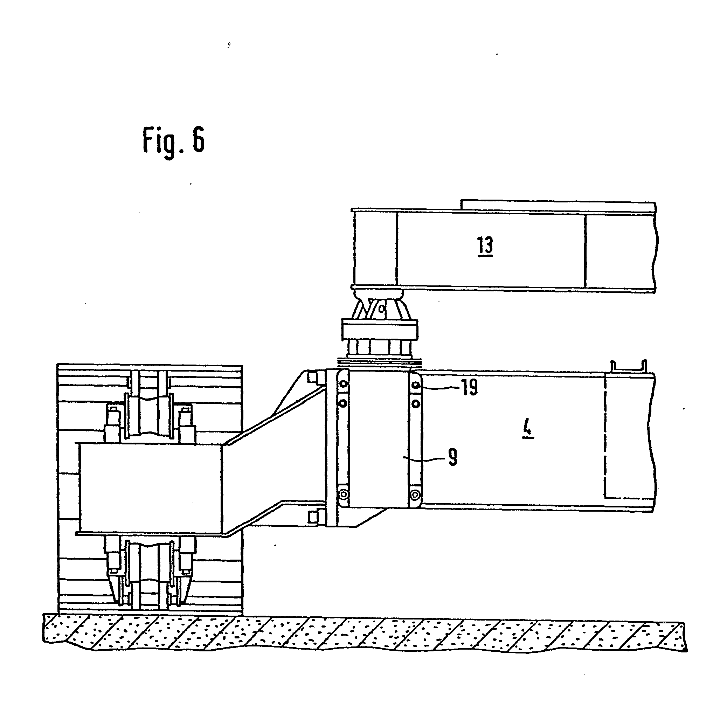

Die Ausgestaltung des Unterwagens des selbstfahrenden Raupenkrans nach den Fig. 1–3 ist in vergrösserter Darstellung aus den Fig. 4–6 ersichtlich. Die die Turasse 15 sowie die Kettenumlenkräder und Führungsrollen lagernden Fahrwerksträger 16 sind über die Anschlussstücke 3 mit der zentralen Trägerkonstruktion 4 durch Schraubbolzen 17 verschraubt. Das Niveausteuergerät 18 ist in der dargestellten Weise mit der dreieckförmigen Plattform 13 verbunden. Die Zylinder 8, 9, 10 der hydraulischen Presse sind in der aus Fig. 6 ersichtlichen Weise mit seitlichen Flanschen versehen und durch Schraubbolzen 19 mit der zentralen Trägerkonstruktion 4 des Fahrwerkrahmens verschraubt. Die Köpfe 20 der kombinierten Kugel-Gleitlager sind durch zwei Bolzen 21, 22 starr mit der Plattform 13 verbunden.

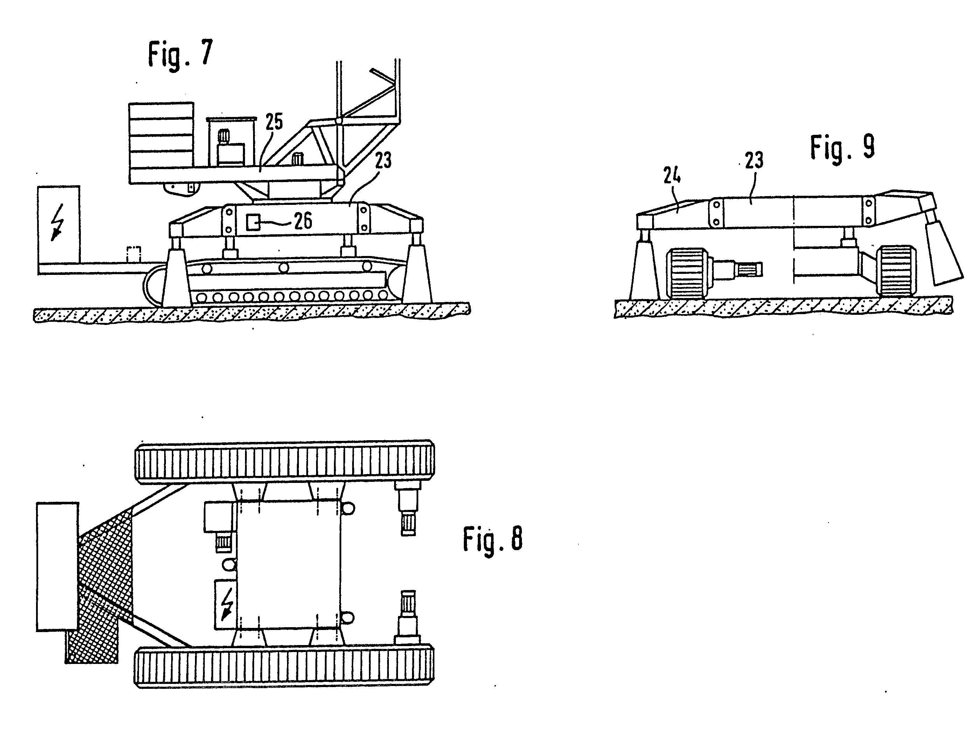

Das Ausführungsbeispiel nach den Fig. 7–9 unterscheidet sich von dem nach den Fig. 1–6 dadurch, dass statt der Plattform 13 mit dem Raupenfahrwerk der Grundrahmen 23 des Portals verbindbar ist. Der Grundrahmen 23 ist mit ausschwenkbaren und in der ausgeschwenkten Stellung verbolzbaren Portalfüssen 24 versehen. Zum Verfahren des Portals 23, 24, auf dem in üblicher Weise über eine Drehverbindung der Kranoberwagen 25 angeordnet ist, wird das Raupenfahrwerk unter den Grundrahmen 23 zwischen den Portalfüssen 24 in der aus den Fig. 7 und 9 ersichtlichen Weise verfahren. Die Kolbenstangen der hydraulischen Presse 8, 9, 10 werden ausgefahren und mit dem Grundrahmen 23 verbolzt. Nach dem Anheben des Grundrahmens 23 über die hydraulischen Pressen können die Portalfüsse hochgeschwenkt und in der hochgeschwenkten Stellung gehaltert werden, so dass sich das Portal mit Turmkran verfahren lässt. Der Grundrahmen 23 ist in üblicher Weise mit einem Niveausteuergerät 26 versehen. Der Grundrahmen 23 des Portals könnte auch über eine Plattform der aus den Fig. 1–6 ersichtlichen Art angehoben werden, so dass das Niveausteuergerät mit dieser Plattform verbunden sein könnte und keine besonderen Hydraulikanschlüsse vorgenommen werden müssten.

Das Raupenfahrwerk der Fig. 7–9 ist grundsätzlich gleicher Art wie das nach den Fig. 1–6.

Anhand der Fig. 10 werden nun die kombinierten Kugelgelenk-Gleitlager beschrieben, die die Kolbenstangen der hydraulischen Pressen mit der Plattform 13 bzw. dem Grundrahmen 23 verbinden. Das obere Ende der Kolbenstange 27 ist mit einem Gewinde 28 versehen, auf das ein schalenförmiger Lagerkörper 29 pilzförmig aufgeschraubt ist. Der Lagerkörper 29 weist auf seiner Oberseite eine kugelkalottenförmige Lagerschale 30 auf. Der untere ringförmige Rand 31 des Lagerkörpers 29 ist kugelig mit zu der Lagerschale 30 konzentrischer Kugelfläche ausgebildet. Zur Drehsicherung ist in eine Bohrung des Lagerkörpers 29 eine Schraube 32 eingeschraubt, die in eine entsprechende Mulde auf der Stirnseite der Kolbenstange 27 eingreift.

In der Lagerschale 30 ist eine Lagerscheibe 33 gelagert, die auf ihrer Unterseite eine zu der Lagerschale 30 komplementäre Kugelkappe 34 aufweist. Die Oberseite der Lagerscheibe 34 ist als ebene Gleitfläche 35. Mit dem Rand der Lagerscheibe 34 ist ein ringförmiges Teil 36 verschraubt, das an seinem unteren Ende einen nach innengerichteten flanschenförmigen Absatz 37 aufweist, dessen innere Fläche 38 hohlkugelig ausgebildet ist und der komplementären kugeligen Fläche 31 auf der Unterseite des Lagerkörpers 29 anliegt.

Auf der Gleitfläche 35 ruht die Gegengleitfläche 40 der Lagerscheibe 41 des Gleitlagers. Die Lagerscheibe 41 ist an ihrem Rand mit dem ringförmigen Teil 42 verbunden. Zur Verbindung ist das ringförmige Teil 42 mit einem Flansch 43 versehen, der mit der Lagerscheibe 41 fluchtende Bohrungen aufweist, die durch die Schraubbolzen 44 hindurchgeführt sind. Das ringförmige Teil 42 ist mit einem unteren flanschförmig nach innengezogenen Rand 45 versehen, der eine innere ringförmige radiale Lagerfläche 46 aufweist, die parallel zu der Lagerfläche 40 der Lagerscheibe 41 ist. Die Lagerfläche 46 liegt auf der radialen ebenen Lagerfläche 47, die auf der unteren ebenen radialen Stirnfläche des ringförmigen Teils 36 vorgesehen ist und parallel zu der Lagerfläche 35 ist.

Zwischen der äusseren Wandung 48 des ringförmigen Teils 36 und der inneren Wandung 49 des ringförmigen Teils 42 ist ein zylindrischer Ringraum 50 gebildet, in dem mehrere Ringe 51 aus elastomerem Material angeordnet sind. Die Ringe 51 aus elastomerem Material stützen sich unter Vorspannung auf den Wandungen des Ringraumes 50, so dass sie bei einer Querverschiebung der Lagerscheiben 33 und 41 bestrebt sind, diese unter zunehmender Rückstellkraft wieder in ihre gemeinsame zentrale Ausgangslage zurückzuführen.

Die Lagerscheiben und Lagerkörper sind in der dargestellten Weise mit Schmiernippeln und Schmiermittelbohrungen versehen.

Der Übergang zwischen dem ringförmigen Teil 42 und dem Zylinder 52 der hydraulischen Presse ist durch einen Faltenbalg 53 aus elastomerem Material überbrückt.

Die Lagerscheibe 41 ist auf ihrer oberen Rückseite in der dargestellten Weise mit gabelförmig angeordneten Stegen versehen, zwischen denen mit dem Bolzen 21 ein ösenförmiges Anschlussstück der Plattform oder des Grundrahmens verbolzt ist.

**Patentansprüche**

1. Fahrwerk mit einer mit dessen Fahrwerksrahmen (1, 2, 3, 4) über hydraulische Pressen (8, 9, 10) verbundenen Plattform (13, 23), vorzugsweise Raupenfahrwerk für Krane, mit einem Niveausteuergerät (18, 26), das die Pressen bei einer Neigung des Fahrwerks derart steuert, dass die Plattform in einer im wesentlichen waagerechten Lage verbleibt, wobei die Pressen-Zylinder starr und senkrecht am Fahrwerksrahmen befestigt sind, dadurch gekennzeichnet, dass zur ausschliesslichen Verbindung von Fahrwerksrahmen (1, 2, 3, 4) und Plattform (13, 23) mindestens drei Pressen-Zylinder vorgesehen sind, deren Kolbenstangen (27) jeweils mit einem Teil (29) eines Universalgelenks verbunden sind, dessen anderer Teil (33) mit einer ebenen Gleitfläche (35) eines Gleitlagers versehen ist, dessen Gegenlagerteil (41) zu dem zu beiden Lagern gehörenden Teil (33) allseitig um einen begrenzten Weg gegen eine Rückstellkraft beweglich und mit der Plattform (13, 23) verbunden ist.

2. Fahrwerk nach Anspruch 1, dadurch gekennzeichnet, dass das Universalgelenk aus einem Kugelgelenk besteht.

3. Fahrwerk nach Anspruch 1 oder 2, dadurch gekennzeichnet, dass auf der Kolbenstange (27) ein auf seiner Oberseite mit einer kugelkalottenförmigen Lagerschale (30) versehenes Gelenkteil (29) befestigt ist, dessen unterer ringförmiger Umfangsbereich (31) kugelig mit zu der Lagerschale (30) konzentrischer Kugelfläche ausgebildet ist, dass in der Lagerschale (30) eine Lagerscheibe (33) mit einem unteren zu dieser komplementären Kugelabschnitt (34) abgestützt ist, die auf ihrer Oberseite mit der ebenen Lagerfläche (35) versehen und an ihrem Rand mit einem ringförmigen Teil (36) verbunden ist, das einen unteren nach innen gerichteten flanschenförmigen Absatz (37) aufweist, der auf seiner Innenseite eine dem kugeligen ringförmigen Umfangsbereich anliegende konkave kugelkalottenförmige Fläche (38) aufweist.

4. Fahrwerk nach einem der Ansprüche 1–3, dadurch gekennzeichnet, dass das mit einer ebenen Gleitfläche (40) versehene Gegenlagerteil (41) mit einem dem ringförmigen Teil (36) des Kugelgelenks unter Bildung eines Ringraumes (50) übergreifenden rohrabschnittförmigen Ringteil (42) verbunden ist, das an seinem unteren Ende einen nach innen weisenden flanschförmigen Absatz (45) aufweist, der mit einer ebenen, radialen, zu der oberen Gleitfläche (40) parallelen Gleitfläche (46) versehen ist, die an einer auf der unteren Stirnfläche des ringförmigen Teils (36) gebildeten Gleitfläche (47) anliegt, und dass der Ringraum (40) vorgespannte elastisch federnde, sich gegen dessen Wandungen abstützende Elemente (51) aufweist.

5. Fahrwerk nach einem der Ansprüche 1–4, dadurch gekennzeichnet, dass die Elemente (51) aus Ringen aus elastomerem Material bestehen.

6. Fahrwerk nach einem der Ansprüche 1–5, dadurch gekennzeichnet, dass die den Ringraum begrenzenden Wandungen der ringförmigen Teile (36, 42) zylindrisch sind.

## Claims

1. An undercarriage comprising a platform (13, 23) which is connected by hydraulic presses (8, 9, 10) to the undercarriage frame (1, 2, 3, 4), preferably on tracklaying undercarriage for crane, comprising an elevation control device (18, 26), which in case of an inclination of the undercarriage controls the presses to maintain the platform in a substantially horizontal position, wherein the press cylinders are rigidly secured to the undercarriage frame at right angles thereto, characterized in that at least three press cylinders are provided for exclusively connecting the undercarriage frame (1, 2, 3, 4) and the platform (13, 23), each of the piston rods (27) of said cylinders is connected to one part (29) of a universal joint, the other part (33) of which is provided with a planar sliding surface (35) of a sliding surface bearing and the other part (41) of said bearing is movable in all directions over a limited distance against a restoring force and is connected to the platform (13, 23).

2. An undercarriage according to claim 1, characterized in that the universal joint is a ball joint.

3. An undercarriage according to claim 1 or 2, characterized in that a part (29) of a joint is secured to the piston rod (27) and is provided on its top with a bearing shell (30) having the shape of a spherical cap and has a lower annular peripheral portion (31) which is spherical and has a spherical surface which is concentric to the bearing shell (30), a bearing disc (33) is supported in the bearing shell (30) and has a spherical lower portion (34) which is complementary to the bearing shell (30), the bearing disc is provided on its upper surface with a planar bearing surface (35) at its rim to an annular member (36), which has an inwardly directed flangelike lower stop (37), which is provided on its inside with a concave spherical cap-shaped surface (38) which contacts the spherical annular peripheral portion.

4. An undercarriage according to any of claims 1–3, characterized in that the other bearing part (41) which has the planar sliding surface (40) is connected to an annular member (42) which consists of a tube section and surrounds the annular part (36) of the ball joint so as to define an annular space (50) and at its lower end has an inwardly directed, flangelike step (45), which is provided with a planar radial sliding surface (46) that is parallel to the upper sliding surface (40) and contacts a sliding surface (47) which is formed on the lower end face of the annular part (36), and the annular space (40) contains elastically resilient elements (51) which bear on the walls of said annular space.

5. An undercarriage according to any of claims 1–4, characterized in that the elements (51) consist of rings of elastomeric material.

6. An undercarriage according to any of claims 1–5, characterized in that those walls of the annular parts (36, 42) which define the annular space are cylindrical.

## Revendications

1. Train de roulement comportant une plateforme (13, 23) reliée au cadre du train de roulement (1, 2, 3, 4) par le truchement de presses hydrauliques (8, 9, 10), de préférence un train de roulement pour des grues avec un correcteur d'assiette (18, 26) qui commande les presses de manière telle que la plate-forme reste dans une position essentiellement horizontale en cas d'une inclinaison du train de roulement, les cylindres de presse étant fixés au cadre de train de roulement de façon rigide et verticale, caractérisé par le fait que la liaison entre le cadre du train de roulement (1, 2, 3, 4) et la plate-form (13, 23) est assuré exclusivement par au moins trois cylindres de presse dont les bielles (27) sont liées à une pièce (29) d'un joint universel, et dont l'autre partie (33) est munie d'une surface de glissement lisse (35) d'un roulement à galets, dont la pièce opposée (41) est élastiquement mobile dans tous les sens sur une distance limitée par rapport à la pièce (33) appartenant aux deux roulements et reliée à la plate-form (13, 23).

2. Train de roulement selon la revendication 1, caractérisé par le fait que le joint universel est un joint sphérique.

3. Train de roulement selon les revendications 1 ou 2 caractérisé par le fait qu'une pièce articulée (29) munie de son côté supérieur d'une coquille de roulement ayant la forme de calotte sphérique (30) est placée sur la bielle (27), pièce annulaire dont le secteur annulaire périphérique inférieur (31) est formé de manière sphérique et présente une surface sphérique concentrique à la coquille de roulement (30) et en ce que dans la coquille de roulement (30) un disque (33) est appuyé par une section sphérique (34) inférieure, complémentaire à audit disque, qui est muni de son côté supérieur d'une surface de roulement plane (35) et qui est relié à son bord à une pièce annulaire (36) présentant un étage inférieur (37) orienté vers l'intérieur et ayant la forme d'un flasque, qui présente de son côté intérieur une surface (38) en forme de calotte sphérique concave épousant le secteur annulaire périphérique de configuration sphérique.

4. Train des roulement selon les revendications 1-3, caractérisé par le fait que la pièce opposée (41) munie d'une surface de glissement plane (40) est reliée à une pièce annulaire (42) ayant la forme d'une section de tuyau et chevauchant la partie annulaire (36) du joint sphérique tout en formant un creux annulaire (50), ladite pièce annulaire présentant à son extrémité inférieure un étage (45) ayant la forme d'un flasque orienté vers l'intérieur et muni d'une surface de glissement (46) plane et radiale, parallèle à la surface de glissement supérieure (40), qui épouse une surface de glissement (47) formée sur la face frontale inférieure de la pièce annulaire (36) et en ce que le creux annulaire (40) présente des éléments (51) précontraints, suspendus élastiquement, s'appuyant contre les parois du creux annulaire (40).

5. Train de roulement selon les revendications 1-4, caractérisé par le fait que les éléments (51) consistent d'anneaux en matériau élastomère.

6. Train de roulement selon les revendications 1-5, caractérisé par le fait que les parois délimitant le creux annulaire des pièces annulaires (36, 42) sont cylindriques.

Fig. 1

Fig. 3

Fig. 2

0 129 806

Fig. 4

13

21
22
20

0 129 806

9

Fig. 5

# Fig. 6

Fig. 9

Fig. 7

Fig. 8

Fig. 10

0 129 806

17